# EUROPEAN PATENT SPECIFICATION

(11) **EP 0 637 351 B1**
(45) Date of publication and mention of the grant of the patent: **11.09.1996**
(21) Application number: 92913758.6
(22) Date of filing: 18.06.1992
(51) Int. Cl.: D21H 11/14, D21C 5/02, D21C 9/10

(54) **WOOD-FREE PULP AND WHITE PAPER PRODUCT**
HOLZFREIER ZELLSTOFF UND WEISSES PAPIERPRODUKT
PATE A PAPIER DEPOURVUE DE BOIS ET PRODUITS DE PAPIER BLANC

(30) Priority: 23.04.1992 US 872531
(43) Date of publication of application: 08.02.1995
(73) Proprietor: DOMTAR INC., Montreal, Quebec H3A 1L6 (CA)
(72) Inventor: NGUYEN, Xuan Truong, Montreal, Quebec H3R 2B3 (CA)
(74) Representative: Huber, Bernhard, Dipl.-Chem.
(86) International application number: CA9200272
(87) International publication number: WO9322499

(56) References cited:
- WO-A-92/15751
- JP-A- 5 717 178
- APPLIED POLYMER SYMPOSIA no. 37, May 1982, NEW YORK US pages 1071 - 1085 BOESEN ET AL. : 'SECONDARY FIBERS-SECONDARY QUALITY?'
- TAPPI JOURNAL vol. 69, no. 3, March 1986, NORCROSS US pages 66 - 69 SMITH : 'Using OCC in container board grades'

## Description

### TECHNICAL FIELD

This invention relates to a cellulose fiber pulp produced by recycling waste corrugated paperboard; the invention also relates to wood-free white paper containing fibers of recycled old corrugated containers and a process for producing the wood-free white paper and the wood-free pulp.

### BACKGROUND ART

Paperboard, including corrugated paperboard, is widely used in packaging; millions of tons of used paperboard are discarded annually, and more than 70% of such discarded waste in Canada goes to landfill sites.

Processes have been proposed to recycle at least a portion of such waste paperboard primarily for use with virgin pulp. Prior processes involve cleaning to remove non-wood contaminants and repulping to form a brownstock which is then mixed with virgin pulp for making linerboard or corrugating medium for use in corrugated paperboard.

The quality of the re-pulped fibers is lower than that of comparable virgin pulp fibers and thus it is usual to use the re-pulped fibers only in admixture with higher quality virgin fibers, or to employ chemical additives such as resin or starch to compensate for the inferior quality of the re-pulped fibers. The inferior quality of re-pulped fibers as compared with comparable virgin pulp fibers arises from the processing to which the fibers were subjected during the original paperboard manufacture, and also to aging in the paper product.

In US-A-4,737,238 recycling of waste paper containing aluminum is described in which an aqueous pulp suspension of the waste paper is screened and then dewatered to produce a white water stream containing most of the aluminum, whereafter the pulp is subjected to oxygen delignification. In CA-A-1,110,411 waste paperboard which contains wax and resin is re-pulped by immersing it in a weak sulphate black liquor at a temperature of 65.5 to 93.3°C (150 to 200°F). to produce defiberization of the waste and separation of wax and resins from the fibers.

Paperboard is itself typically produced from virgin pulp. The production of virgin pulp involves reacting or cooking wood chips with an alkaline cooking liquor at an elevated temperature. The cooking liquor may be a kraft, soda, alkali, sulfite or polysulfide cooking liquor, or a modification thereof, for example an anthraquinone modified cooking liquor. The pulp yield depends on the pulping conditions including reaction time, temperature, liquor type and chemical dosage, and can be as low as 50% to as high as 85%.

Lignin is a component of the woodchips which is dissolved by the cooking liquor in the manufacture of cellulose pulp. The character of the pulp produced is dependent on the extent of lignin removal from the woodchips, and hence on the residual lignin content of the final pulp.

The kappa number represents a measure of residual lignin content. Higher kappa numbers indicate higher residual lignin levels.

The kappa number of a brownstock pulp obtained from cooking softwood in a kraft liquor is typically 50 to 100, and such a pulp is used for making linerboard of corrugated paperboard. The kappa number of a brownstock pulp obtained from cooking hardwood in a kraft liquor is typically 130 to 160, and such a pulp is used for making the corrugated medium of corrugated paperboard.

The kappa number of a hardwood brownstock pulp would need to be reduced to about 10 to 15, and that of a softwood brownstock to about 25 to 35 to provide a pulp suitable for bleaching to produce white paper products.

Corrugated paperboard waste comprising linerboard and corrugating medium has a kappa number of 80 to 120.

### DISCLOSURE OF THE INVENTION

Subject matter of the invention is as claimed in claims 1 to 13.

The present invention seeks to provide a process for recycling waste corrugated paperboard.

This inventon seeks to provide a recycled pulp from corrugated paperboard.

Still further this invention seeks to provide such a process in which energy and chemical values are recovered, and, in particular, are recovered and exploited within the process.

Still further this invention seeks to provide a recycled pulp corrugated containers from waste , which recycled pulp has a lower kappa number than that of the waste and which can be employed as the sole pulp in paper product manufacture.

Still further this invention seeks to provide such a process to produce a recycled pulp of low kappa number suitable for bleaching to produce white paper products.

Still further the invention seeks to provide a wood-free white paper, for example, fine paper of writing and printing grades, tissue, or the white layer of food grade paper board, which wood-free white paper contains or is comprised of cellulose pulp fibers consisting essentially of fibers from recycled old corrugated containers.

The invention still further seeks to provide a wood-free pulp for producing such a wood-free white paper.

Still further the invention seeks to provide a process for producing the wood-free pulp and the wood-free white paper.

In accordance with one aspect of the invention as described in claim 1 there is provided a wood-free white paper product which comprises cellulosic pulp fibers consisting essentially of recycled fibers of old corrugated containers.

In accordance with another aspect of the invention as described in claim 6 there is provided a bleached, wood-free pulp which consists essentially of a bleached, cellulosic pulp of recycled fibers of old corrugated containers.

In accordance with still another aspect of the invention as described in claim 8 there is provided a process for producing a wood-free white paper product which comprises: providing a bleached, wool-free pulp, of which at least 10%, by weight, consists essentially of recycled fibers of old corrugated containers, forming the pulp into a white paper product in a paper-making operation, and recovering the formed white paper product.

In accordance with still another aspect of the invention as described in claim 12 there is provided a cellulosic pulp consisting essentially of fibers of recycled old corrugated containers, the pulp having a viscosity of at least 10 cps and a kappa number up to 40, and the fibers being of a quality such that the pulp can be employed as the sole pulp in fine paper manufacture.

### DESCRIPTION OF PREFERRED EMBODIMENTS

### i) Pulp from Recycled OCC

In accordance with the present invention it has surprisingly been found that wood-free white paper products can be produced from a pulp of recycled old corrugated containers (OCC).

Previously it was generally considered that a pulp of recycled OCC could only be employed for manufacture of low grade brown paper products and corrugated containers. Furthermore, it was generally considered that the recycled pulp could not be employed as the sole pulp to manufacture wood-free white paper products.

It was thus completely surprising that a pulp of recycled OCC would have characteristics and quality such that it might be employed as the sole pulp in the manufacture of wood-free white paper products.

The recycled OCC pulp is surprisingly found to be a high quality pulp having characteristics comparable with or superior to virgin pulps based on hardwood fibers and softwood fibers, and deinked, recycled fine paper pulps.

The term "wood-free" as employed in the paper making art, identifies pulps which are free or essentially free of lignin, and in particular pulps which have a lignin content of less than 1%, by weight.

The white paper products contemplated by the invention include fine papers used for printing and writing, tissue papers and white paper layers which are employed as liners in food grade board employed to manufacture packaging for foods.

In the context of the invention it is to be understood that the paper products contemplate not only paper products which would normally be described as white, but also paper products which would be white, if not for the presence of colouring agents or pigments intentionally added to provide a different colouration, for example, the pinks, pale blues and creams frequently employed in many fine papers intended for writing papers and envelopes in stationery. In the context of this invention "old

corrugated containers" or OCC refers to manufactured corrugated containers, as well as waste material produced in the manufacture of such containers.

The recycled OCC pulp may comprise the sole pulp component in the manufacture of the wood-free white paper product or may be admixed with virgin pulp. In general the recycled OCC pulp will comprise from 10 to 100%, preferably 25 to 100%, by weight, of the pulp component of the white paper product.

The recycled OCC pulp is, in particular a bleached pulp having a brightness of 80 to 89 ISO. The bleached, and the parent unbleached recycled pulp, should have a viscosity of at least 10 cps and should produce a paper having a tensile breaking strength of about 5 to about 7 km.

The recycled OCC bleached and parent pulps will typically have a drainage characteristic of 500 to 600 CSF (Canadian Standard Freeness); the bleached pulp is refined for manufacture of white paper product to a pulp of 400-450 CSF; the refining increases the flexibility of the fibers, and the strength, but does result in some loss of drainage characteristics. The refining involves mechanically rubbing the fibers together.

The old corrugated containers are formed from a corrugated paper board layer sandwiched between two liner board layers. The corrugated paperboard layer is formed from a hardwood pulp and the liner board layers are formed from a softwood pulp. The recycled OCC pulp thus comprises both hardwood and softwood fibers. Typically the pulp will contain about 25 to 35%, usually about 30%, by weight, of hardwood fibers, and about 65 to 75%, usually about 70%, by weight, of softwood fibers, to a total of 100%.

The old corrugated containers may also be fabricated with a plurality of corrugated layers and a corresponding increased number of liner board layers; for example, two corrugated layers separated by an intermediate liner board layer, and two outer liner board layers.

The corrugated paper board is generally recognized as producing a low strength pulp when reslushed, as a result of damage to the fibers in the manufacture of the corrugated board, and the fibers are generally recognized as being of high lignin content, and being rigid or non-flexible. The processing of hardwood fibers in the manufacture of pulp and corrugated paperboard involves mechanical grinding which produces short, damaged fibers of low strength which have poor drainage characteristics. Typically the processed hardwood fibers have an average fiber length of less than 0.7 µm, usually less than 0.5 µm, with 15 to 30%, by weight, being very fine with an average length of less than 0.2 um.

The linerboard of old corrugated container board is of softwood fibers. These fibers still contain a high level of the original lignin content, which is partially removed by chemical cooking and refining, thereby giving the fibers more flexibility, in the manufacture of the softwood pulp for liner board.

The softwood fibers typically have an average length of about 2.5 µm.

Fine papers are typically produced from virgin pulps which comprise a mix of low yield kraft cooked softwood fiber and hardwood fiber. The softwood fiber provides the strength, flexibility and drainage characteristics required for fine papers, and the hardwood fibers are employed for economy to reduce the amount of the more expensive softwood fibers. A virgin fiber furnish for fine paper manufacture may typically contain about 70%, by weight, of hardwood fiber and 30%, by weight, of softwood fiber.

Fine papers are also manufactured from recycled fine papers; this manufacturing procedure employs de-inked, reslushed used fine papers.

### ii) Recycled OCC Pulp:

While the recycled OCC pulp is especially valuable, when bleached, in the manufacture of wood-free white paper products, the recycled pulp also has utility in the manufacture of other paper products.

Thus the recycled OCC pulp may be employed as a substituted for semi-bleached softwood pulps.

### iii) Recycling

A particular process for recycling waste cellulosic paper product to produce a cellulosic fiber pulp comprises: digesting a waste manufactured paper product having a kappa number of at least 80 in an aqueous alkaline cooking liquor containing at least one of sodium sulphide and anthraquinone at a temperature of 160°C to 180°C to effect a delignification of cellulosic fibers in the waste product and produce a brownstock of a cellulosic fiber pulp and spent liquor, the cellulosic fiber pulp having a kappa number up to 40, a viscosity of above 10 cps, and comprising fibers of a quality such that the pulp can be employed as the sole pulp in paper product manufacture.

This process for recycling waste cellulosic material, for example paper product or pulp, produces a cellulosic pulp and permits recovery of energy and chemical values which can be exploited in the process.

The latter process comprises digesting the waste cellulosic material in an aqueous cooking liquor at an elevated temperature to effect delignification and produce a brownstock containing a cellulosic pulp and spent liquor, in which the cellulosic pulp has a kappa number lower than that of the waste paper product or pulp.

The brownstock is washed to produce a brownstock pulp and a brownstock washing liquor, which washing liquor contains inorganic chemicals and combustible organic substances formed during the digesting.

The washed brownstock pulp is recovered for use in paper product manufacture; and at least part of the brownstock washing liquor is concentrated, for example by evaporation, to produce a concentrate. The organic substances in the concentrate are combusted with production of heat energy which is recovered, and inorganic chemical values are produced from the inorganic chemicals which values are also recovered. The recovered heat energy can be used as a source of heat for the cooking liquor to produce the required elevated temperature, and the inorganic chemical values provide a chemical source for use in preparation of the cooking liquor.

In a particular embodiment of the recycling process the cooking liquor employed in the processes of the invention comprises a kraft white liquor component containing sodium hydroxide and sodium sulfide and a kraft black liquor component containing organic wood residues and inorganic chemicals; and a portion of the brownstock washing liquor which is derived from the cooking liquor is cycled to form part of the black liquor component. The kraft black liquor component essentially acts as a diluent for the active white liquor component, providing part of the water needs of the white liquor component; at the same time the black liquor component may contain residual or unused chemicals useful in the delignification.

In a particular embodiment the waste cellulosic material is waste paperboard.

The inorganic chemicals in the brownstock washing liquor are, when the cooking liquor comprises kraft liquor, sodium carbonate and sodium sulfate; during combustion of the organic substances in the concentrate of the brownstock washing liquor, the sodium sulfate is reduced to sodium sulfide to form a molten mass of sodium sulfide and sodium carbonate, which can be dissolved in water to form a green liquor which when reacted with quicklime to convert the sodium carbonate to sodium hydroxide with precipitation of calcium carbonate leaves white liquor of sodium sulfide and sodium hydroxide, which can be cycled to the digesting step as white liquor component.

It is found that the product brownstock pulp of lower kappa number is superior to the re-pulped waste in strength and bonding characteristics in paper product manufacture.

In particular the product brownstock pulp has a kappa number up to 40 and thus significantly below the kappa number of the waste pulp and a significant improvement is obtained in strength characteristics; in particular the fiber pulp has a viscosity above 10 cps, and preferably at least 11 cps; suitably the pulp is characterized in that paper produced from it has a tensile breaking strength of at least 5 km.

Thus the process of the invention provides for recycling of a waste paperboard to provide a pulp of superior character as compared with prior recycled pulps from waste, and permits recovery of energy and chemical values which can be exploited in the recycling process.

A particular advantage of the process of the invention is that it can be carried out efficiently using old kraft mill equipment which is no longer efficient when used in the manufacture of virgin pulp from wood chips. The shorter treatment time and lesser amount of cooking liquor required in the process of the invention as compared with production of virgin pulp from wood chips enable such old kraft mill equipment to be exploited efficiently and economically. In particular the cooking liquor requirement in the process of the invention is about 55 to 65%, more usually about 60% of the requirement for producing virgin pulp from wood chips; it will be understood that the cooking liquor requirement also depends on the kappa number value required in the pulp product.

The invention is especially suited for recycling corrugated paperboard having a kappa number of 80 to 120 from which there is produced a recycled brownstock pulp having a kappa number of up to 40, and in particular a recycled pulp having a kappa number of 15 to 30, preferably 20 to 25, suitable for bleaching to produce white paper products.

### BRIEF DESCRIPTION OF DRAWINGS

FIG. 1 is a schematic illustration of an installation for producing recycled paper products; and
FIG. 2 is a plot demonstrating the favourable strength characteristics with drainage characteristics of recycled OCC pulps of the invention, as compared with de-inked fine paper pulps.

### MODES FOR CARRYING OUT THE INVENTION

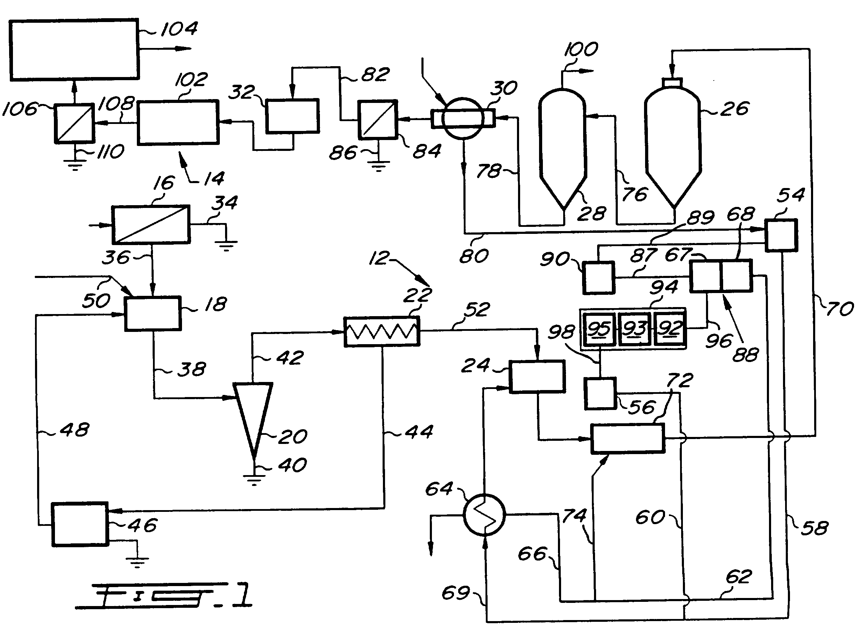

With further reference to Fig. 1, an installation 10 for producing recycled paper products includes a waste paperboard recycling assembly 12 and a paper production assembly 14.

Waste paperboard recycling assembly 12 includes a dry pulper 16, a pulp vessel 18, a cleaning unit 20 and a press 22.

Assembly 12 further includes a pulp vessel 24, a digester 26, a blow tank 28, a brownstock washer 30, a pulp storage vessel 32, a furnace unit 88 having a reaction chamber 67 and a boiler 68 and a reactor unit 94.

A line 34 from dry pulper 16 removes contaminants separated from the paperboard during the so-called dry pulping; and a line 36 connects dry pulper 16 with pulp vessel 18 for flow of the pulp.

A line 38 connects pulp vessel 18 and cleaning unit 20. Cleaning unit 20 has a line 40 for removal of contaminants.

A line 42 connects cleaning unit 20 and press 22 and a line 44 connects press 22 with a wash liquor storage vessel 46. A line 48 connects storage vessel 46 and pulp vessel 18. Pulp vessel 18 has a water make-up line 50.

A line 52 connects press 22 and pulp vessel 24.

A black liquor storage tank 54 has an outlet line 58 and a white liquor tank 56 has an outlet line 60. Lines 58 and 60 meet in common line 69 for delivering black liquor and white liquor into pulp vessel 24.

A heater 64 is disposed in common line 69 having a steam line 66 connected to boiler 68 or furnace unit.

A line 70 communicates pulp vessel 24 with digester 26. A steam mixer 72 is disposed in line 70 and steam mixer 72 has a steam inlet line 74 connected to steam line 66 from boiler 68.

A line 76 communicates the digester 26 with blow tank 28; and a line 78 communicates the blow tank 28 with brownstock washer 30.

A black liquor line 80 communicates the brownstock washer 30 with black liquor tank 54.

A line 82 communicates brownstock washer 30 with pulp storage vessel 32. Screen 84 is disposed in line 82 and has an outlet line 86 for contaminants.

Black liquor tank 54 is connected by line 89 to concentrator 90, and a concentrate line 87 connects concentrator 90 to the reaction chamber 67 of furnace unit 88. Reactor unit 94 for producing white liquor has a green liquor tank 92, a first reactor 93 and a second reactor 95. A line 96 connects reaction chamber 67 of furnace unit 88 with green liquor tank 92. A white liquor line 98 communicates second reactor 95 of reactor unit 94 with white liquor tank 56.

A blow heat recovery line 100 extends from blow tank 28 and may optionally provide heat to boiler 68.

Paper production assembly 14 includes a bleach plant 102 and a paper machine 104. A screen 106 is disposed in a line 108 between bleach plant 102 and paper machine 104; and line 110 provides for removal of contaminants separated in screen 106.

The recycling operation illustrated in Fig. 1 is now more particularly described by reference to the recycling of waste corrugated paperboard, which paperboard particularly comprises a pair of opposed linerboards with a corrugated medium sandwiched therebetween. Such paperboard may be soiled as a result of use and additionally may have ink printing thereon, as well as polymer surface coatings on the linerboard, adhesive between the corrugated medium and the liners, metal and plastic attachments and paper and plastic tape. The waste corrugated paperboard is fed to dry pulper 16 which breaks the paperboard down to a pulp of fibers and separates the fibers from non-fiber contaminants, for example, metal components and plastic tape. Although referred to as "dry pulping", water is used whereby an aqueous fibre pulp having a solids content, by weight, of 20 to 30% is produced in pulper 16. Separated non-fiber components, become dislodged from the paperboard in pulper 16 and are removed through line 34.

The pulped waste is fed through line 36 to pulp vessel 18 and water is introduced through line 50 to produce an aqueous pulp mix having a solids content typically of 3 to 4%, by weight. Suitably the mix is gently stirred in vessel 18 to separate further non-wood contaminants from the paperboard. The aqueous pulp mix is fed from vessel 18 along line 38 to cleaning unit 20 which may typically include a screen unit and a separate centrifuge vessel. Fine contaminants are removed from the pulp mix through the openings of the screen unit whereafter the pulp mix is delivered to the centrifuge vessel where layer contaminants are removed as the dense fraction developed in the centrifuge vessel. The contaminants are removed through line 40. The aqueous mix is transported from cleaning vessel 20 to press 22 through line 42. Press 22 may, for example, be a screw press in which the aqueous mix is dewatered, under a pressing action. The water pressed from the pulp mix in press 22 flows along line 44 to waste liquor storage vessel 46 from which water may be cycled through line 48 to meet the water requirement in pulp vessel 18. Make-up water is fed to vessel 18 through line 50. Contaminants settling in storage vessel 46 may be removed through a sewer line.

The wet, pressed pulp product in press 22 is delivered through line 52 to pulp vessel 24 and a mix of black liquor and white liquor is fed through line 62 into vessel 24 to provide a wet pulp product having a solids content typically of 30 to 40%, more especially about 35% by weight.

The black liquor from black liquor tank 54 is fed to line 69 along line 58 and the white liquor in line 69 is fed along line 60 from white liquor tank 56. The liquor in line 69 is heated to an elevated temperature, typically 80 to 90°C. The heat in heater 64 is provided by steam line 66 from boiler 68.

The liquor in line 62 serves to transport the pulp from vessel 24 into line 70 and reduces the solids content to about 10 to 25%, by weight.

The aqueous pulp mix in vessel 24 is transported through line 70 to digester 26 by the liquor from line 62. The mix in line 70 passes through the steam mixer 72 in which the temperature is raised to a temperature of about 160 to 180°C. The steam for steam mixer 72 is fed from boiler 68 through steam inlet line 74. The direct introduction of steam into the hot aqueous pulp in steam mixer 72 may reduce the solids content of the pulp mix and the pulp mix arriving in digester 26 has a solids content typically of 12 to 18, usually about 15% by weight. The pulp is cooked in the cooking liquor in digester 26 at an elevated temperature of 160 to 180°C for a period typically about 30 to 50 minutes, under a saturated steam pressure which typically may be 8.08kg/cm²(115 psi). The cooking in digester 26 delignifies the pulp to produce a hot brownstock which comprises the brownstock pulp and spent liquor which contains dissolved organic substances from the pulp and inorganic salt materials from the cooking liquor.

The hot brownstock is fed from digester 26 to blow tank 28, where the steam pressure is released and from which heat is recovered in a hot exhaust from line 100. The brownstock is fed along line 78 from blow tank 28 to brownstock washer 30 where it is washed to produce a brownstock pulp and a brownstock wash liquor. The brownstock wash liquor is fed from brownstock washer 30 along line 80 to black liquor tank 54 and the brownstock pulp is fed along line 82 to pulp storage vessel 32. The brownstock pulp in line 82 is screened in screen 84 and the contaminants are removed through outlet lines 86.

A major portion of the black liquor in black liquor tank 54 is fed along line 89 to concentrator 90. Black liquor is concentrated in concentrator 90 by evaporation of water typically to a concentration of 55% to 75%, preferably about 65%, and the resulting concentrate is fed along line 87 to the reaction chamber 67 of furnace unit 88. Organic substances in the concentrate are combusted in furnace 88 and the hot exhaust gases generated in the combustion heat the water in the integral boiler 68. The concentrate particularly contains sodium sulfate and sodium carbonate which forms a molten mass in reaction chamber 67. The sodium sulfate is reduced to sodium sulfide to leave a molten mass of sodium sulfide and sodium carbonate in reaction chamber 67. The molten mass is delivered from chamber 67 through line 96 to tank 92 where it is dissolved in water to produce a green liquor. The green liquor is fed to first reactor 93 where quicklime, calcium oxide is reacted with the sodium carbonate to produce sodium hydroxide in a lime mud containing the sodium sulfide and sodium hydroxide, as well as calcium carbonate. The lime mud is fed to reactor 95 where the calcium carbonate is thermally decomposed to generate calcium oxide which can be recycled to reactor 93. In this way a white liquor is produced in reactor 95 and fed from reactor unit 94 along white liquor line 94 to white liquor tank 56.

Thus the inorganic chemicals produced in reaction chamber 67 of furnace 88 are employed as chemical values to generate the white liquor used as cooking liquor in digester 26, and the heat energy developed in furnace 88 is used to generate steam in boiler 68 for heater 64 and steam mixer 72.

The brownstock pulp in vessel 32 is bleached in bleach plant 102 to remove the lignin and increase the brightness depending on the desired paper product.

### EXAMPLES

The following Examples serve to illustrate particular aspects of the invention; in these Examples yields and charges are indicated in weight

### Example 1

Commercial corrugated waste in the form of 5.08 x 20.32cm (2x8 ins.) strips was cooked with an alkaline solution containing 2.9 g/l sodium hydroxide and 2.35 g/l sodium sulphide. The liquor sulphidity, i.e. ratio of sodium sulphide over sodium hydroxide plus half sodium sulphide, was 35%. With a liquor to waste ratio of 10 to 1, the effective alkali charge, i.e. weight of sodium hydroxide plus half sodium sulphide over weight of waste material, was 8%. After cooking at temperature of 174°C for about 1 hour, corresponding to an H-factor of 1500, a pulp yield on waste of 72.1% was obtained. The pulp product had a kappa number of 29.9, a viscosity of 14.9 and a brightness of 29.3.

### Example 2

Corrugated waste as in Example 1 was cooked with an alkaline liquor with a sulphidity of 17.2%. The cooking was carried out at 174°C., a liquor to waste ratio of 9 to 1, an effective alkalis charge of 8% and an anthraquinone charge of 0.04%. After about 30 minutes, corresponding to an H-factor of 500, the pulp yield on waste was 72.8% and the pulp product had a kappa number of 39.5, a viscosity of 18.9 and brightness of 26.0.

### Example 3

As in Example 2, but the cooking of waste was carried out for about 1 hour, corresponding to an H-factor of 1500. The pulp yield on waste in this case was 70.2% and the pulp product had a kappa number of 26.7, a viscosity of 13.8 and a brightness of 29.0.

### Example 4

A commercial corrugated waste was re-pulped and cleaned to remove all contaminants from waste. The resultant waste had a kappa number of 91.5, a viscosity of 32.8 and a brightness of 14.8. This waste was then cooked for about 1 hour corresponding to an H-factor of 1500, with an alkaline liquor having a sulphidity of 35%, at a temperature of 174°C., with a liquor to waste ratio of 7 to 1 and an effective alkalis charge of 8%. The pulp yield on waste was 74.8% and the pulp product had a kappa number of 28.5, a viscosity of 13.7 and a brightness of 21.7, standard hand sheets of 60 g/m² were produced from the pulp and standard paper testing methods showed a tensile breaking length of 7.35 km, a burst factor of 48.5 and a tear factor of 126.

### Example 5

Cleaned corrugated waste as in Example 4 was cooked with an alkaline liquor having a sulphidity of 25%, at a temperature of 174°C. with a liquor to waste ratio of 7 to 1 and an effective alkalis charge of 10% for about 1 hour, corresponding to an H-factor of 1400. The cooking produced a yield on waste of 74.1%, and a pulp having a kappa number of 26.6, a viscosity of 12.3 and a brightness of 22.5. Standard hand sheets of 60 g/m² were produced from the pulp and standard paper testing methods showed a tensile breaking length of 6.25 km, a burst factor of 45.3 and a tear factor of 128.

### Example 6

A commercial corrugated waste was re-pulped and cleaned to remove all contaminants from waste. The resultant waste had a kappa number of 84.5, a viscosity of 23.4 and a brightness of 18.6. This was then cooked with an alkaline liquor having a sulphidity of 25%, at a temperature of 174°C. With a liquor to waste ratio of 7 to 1, an effective alkalis charge of 10% for about 45 minutes, corresponding to an H-factor of 1000, the cooking produced a yield on waste of 73.9% and the pulp had a kappa number of 27.2, a viscosity of 12.6 and a brightness of 26.9

### Example 7

As in Example 5, but the cooking of waste was carried out with an effective alkalis charge of 12%. The pulp yield on waste in this case was 71.5% and the pulp product had a kappa of 22.0, a viscosity of 11 and a brightness of 28.9.

### Example 8

Pulp at 3% consistency, produced from Example 5, was bleached in three stages namely D/CEoD. The bleaching chemicals for the first stage was a mixture of chlorine (C) and chlorine dioxide (D) and the pulp bleaching was carried out at 50°C. for 45 minutes. The combined chemical charge was equivalent to a total active chlorine (TAC) of 5.32% at 50% chlorine/chlorine dioxide substitution. The bleached pulp was then extracted at 10% consistency, with 4% caustic (E), at 70°C. and in the presence of oxygen (o) at 3.16kg/cm² (45 psig) pressure. The kappa, viscosity and brightness of the bleached and extracted pulp (D/CEo) was 2.3, 10.9 and 53.8 respectively. The subsequent bleaching of the D/CEo pulp with 0.5% chlorine dioxide at 70°C., for 150 minutes produced a D/CEoD pulp having a brightness of 81.9 and a viscosity of 10.7.

### Example 9

Pulp as produced from Example 3 was bleached in five stages namely D/CEoDED. The total active chlorine TCA was 5.34% and ClO₂ substitution was 50%. The ClO₂ dosage in the D1 stage was 0.7%. The D/CEoD pulp had a brightness of 85.6 and a viscosity of 12.1. The D/CeoD pulp was then extracted with 0.4% caustic at 10% consistency and at a temperature of 75°C. for 30 minutes. The resultant D/CEoDE pulp was then bleached with 0.3% ClO₂ in the S2 stage at 10% consistency and at a temperature of 75°C. for 60 minutes. The final D/CEoDED pulp had a viscosity of 11.6 and a brightness of 87.9. Standard hand sheets of fine paper 60 g/m² were produced from the pulp and standard paper testing methods showed a tensile breaking length of 7.05 km, a burst factor of 54.2 and a tear factor of 117.

### Example 10

The black liquor produced from Example 5 was dried overnight at 100 degrees C, to obtain a solid. Through analytical methods, this solid byproduct was found to have a high heating value of about 6.33 x 10⁶ joules (6000 BTU).

### Example 11

As in example 4, but the cooking of waste was carried out with 10% NaOH and for about 1 hour, corresponding to H-factor of 1500. The pulp yield on waste in this case was 71.5% and the product had a kappa number of 39.0, a viscosity of 13.8 and a brightness of 25.3.

### Example 12

As in example 4, but the cooking of waste was carried out with 15% NaOH and for about 1 hour, corresponding to H-factor of 1500. The pulp yield on waste in this case was 67.9% and the product had a kappa number of 25.8, a viscosity of 10.00 and a brightness of 28.9.

### Example 13

As in example 4, but the cooking of waste was carried out with 10% NaOH and an anthraquinone charge of 0.05% and for about 1 hours, corresponding to H-factor of 1500. The pulp yield on waste in this case ws 72.3% and the product had a kappa number of 30.1, a viscosity of 13.7 and a brightness of 26.0.

### Example 14

*As* in example 4, but the cooking of waste was carried out with 10% NaOH and 0.05% anthraquinone and for about 45 minutes, corresponding to H-factor of 1000. The pulp yield on waste in this case was 73.6% and the product had a kappa number of 34.5, a viscosity of 15.2 and a brightness of 24.4.

### Example 15

A comparison was made of fine papers made from recycled OCC, in accordance with the invention, and conventional virgin pulps for fine papers. The results set out in Table 1 below demonstrate the favourable, often superior characteristics of the fine papers of the invention, as compared with conventional fine papers.

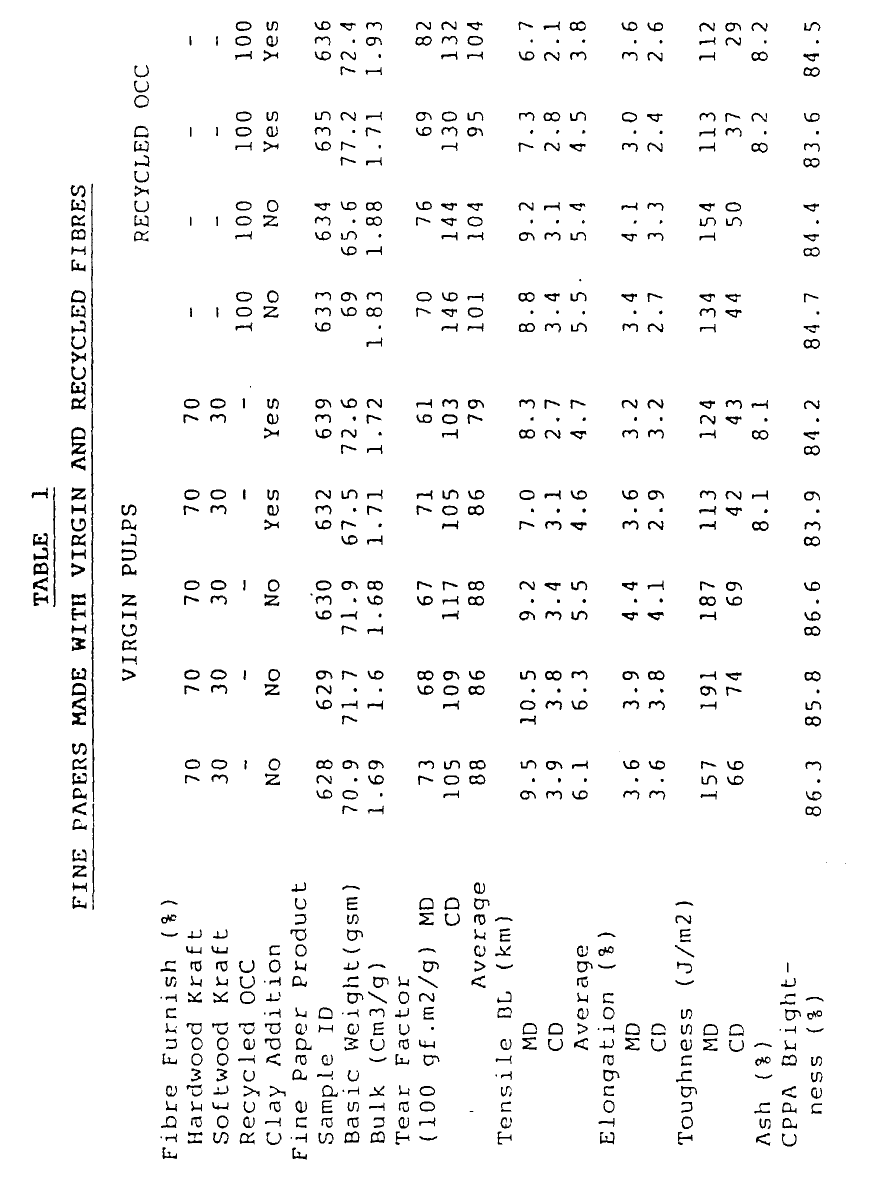

This viscosity parameter in this specification is in centipoise (cps).

The standard hard sheet production in the Examples was by CPPA C-4 or TAPPI T-205-OM88. The standard paper testing methods employed in the Examples were by CPPA D-12 or TAPPI T-220-0M88.

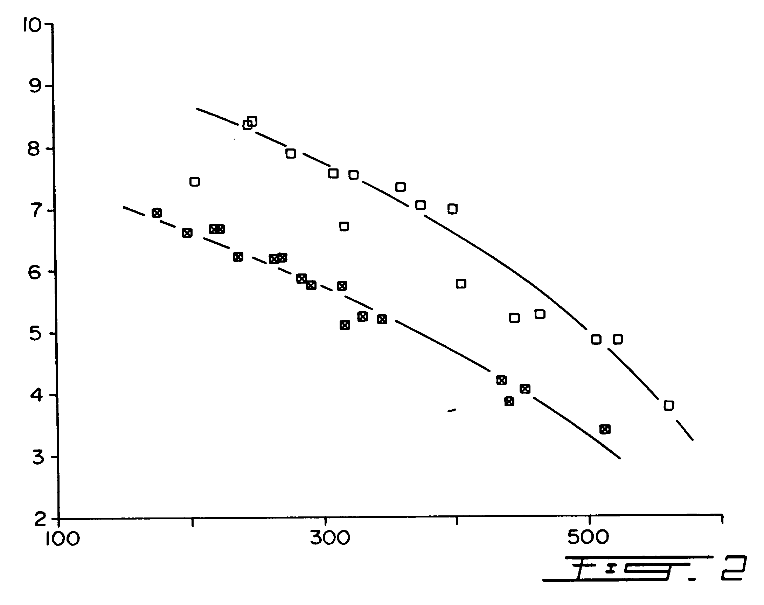

With further reference to FIG. 2, a comparison is made of the tensile breaking strength of paper produced from recycled old corrugated containers in accordance with the invention, and papers produced by de-inking and reslushing used fine papers. It is evident from FIG. 2 that for a given CSF, the strength of the papers produced in accordance with the invention is higher than that of papers produced from the de-inked recycled fine papers. This is certainly a surprising finding, and it was not to have been expected that a pulp of recycled OCC would produce a fine paper having characteristics superior to those of recycled fine paper. Fine papers are recognized as a source of pulp for manufacture of new or recycled fine papers, whereas OCC has only been recognized as a material for use in the manufacture of brown paper products and corrugated and liner board for corrugated containers.

With further reference to Fig. 2 the plot demonstrates the effect of refining and fiber sources. In Fig. 2 the ordinate is the breaking length in km and the absciss is the pulp freeness (CSF). In the two plots in Fig. 2 the white squares plot the values for the papers produced from recycled old corrugated containers and the squares containing crosses plot the values for the papers produced by deinking and reslushing used in papers.

## Claims

1. A paper product having a pulp component comprising 10 to 100%, by weight, of wood-free, bleached cellulosic pulp fibers having a lignin content of less than 1%, by weight, and deriving from recycled fibers of old corrugated containers having a Kappa number of 80 to 120; said recycled fibers containing about 25 to 35%, by weight, of hardwood fibers and about 65 to 75%, by weight, of softwood fibers, to a total of 100%, said wood-free bleached cellulosic pulp fibers having a viscosity of at least 10 cps, a brightness of 80 to 89 ISO, and a cleanliness resulting from removal of contaminants in the old corrugated containers, said viscosity and cleanliness rendering said pulp fibers capable of being the sole pulp component in white paper manufacture, said paper product being white in the absence of added colouring agents or pigments to provide a different colouration.

2. A paper product of claim 1 wherein said wood-free, bleached cellulosic pulp fibers have a CSF of 400 to 450 as refined.

3. A paper product of claim 1 or 2, wherein said pulp component is 100%, by weight, of said wood-free bleached cellulosic pulp fibers.

4. A paper product of claim 1, 2 or 3, having a tensile breaking length of at least 5 km.

5. A paper product of claim 1, 2 or 3, of writing and printing grade.

6. A wood-free, bleached cellulosic fiber pulp deriving from recycled fibers of old corrugated containers having a Kappa number of 80 to 120; said pulp having a viscosity of at least 10 cps and a lignin content of less than 1%, by weight, a brightness of 80 to 89 ISO, containing about 25 to 35%, by weight, of hardwood fibers from corrugated paperboard and about 65 to 75%, by weight, of softwood fibers from liner board, of old corrugated containers, to a total of 100%, and a cleanliness resulting from removal of contaminants in the old corrugated containers, said viscosity and cleanliness rendering said pulp fibers capable of being the sole pulp component in white paper manufacture.

7. A bleached pulp of claim 6 having a CSF of 400 to 450 as refined.

8. A process for producing a paper product comprising:
i) providing a pulp component comprising 10% to 100%, by weight, of wood-free, bleached cellulosic pulp fibers having a lignin content of less than 1%, by weight, a viscosity of at least 10 cps, a brightness of 80 to 89 ISO, said fibers containing about 25 to 35%, by weight, of hardwood fibers, and 65 to 75%, by weight, of softwood fibers, to a total of 100%, said pulp component deriving from recycled fibers of old corrugated containers having a Kappa number of 80 to 120, and having a cleanliness resulting from removal of contaminants in the old corrugated containers, said viscosity and cleanliness rendering said pulp fibers capable of being the sole pulp component in white paper manufacture,
ii) forming said pulp into a white paper product in a paper making operation (104), and
iii) recovering the formed paper product,
iv) said paper product being white in the absence of added colouring agents or pigments added to provide a different colouration.

9. A process according to claim 8, wherein said recycled fibers constitute from 25 to 100%, by weight, of said pulp component.

10. A process according to claim 8, wherein said pulp component is 100%, by weight, of said wood-free bleached cellulosic pulp fibers.

11. A process according to claim 8, 9 or 10, wherein said wood-free, bleached cellulosic pulp fibers have a CSF of 400 to 450.

12. A cellulosic pulp having a Kappa number up to 40, said pulp deriving from fibers of recycled old corrugated containers having a Kappa number of 80 to 120, said fibers having a viscosity of at least about 10 cps, containing about 25 to 35%, by weight, of hardwood fibers and about 65 to 75%, by weight, of softwood fibers, to a total of 100%, and having a cleanliness resulting from removal of contaminants in the old corrugated containers, of a quality such that the pulp, after bleaching to form a wood-free pulp having a lignin content of less than 1%, by weight, and a brightness of 80 to 89 ISO, is capable of being the sole pulp in white paper manufacture.

13. A pulp according to claim 12 having a CSF of 400 to 450 as refined.

## Patentansprüche

1. Papiererzeugnis mit einer Pulpekomponente, umfassend 10 bis 100 Gew.-% holzfreie gebleichte Cellulosepulpefasern mit einem Ligningehalt von weniger als 1 Gew.-% und die aus recyclisierten Fasern von alten Wellpappebehältern stammen, die eine Kappa-Zahl von 80 bis 120 haben, wobei die recyclisierten Fasern etwa 25 bis 35 Gew.-% Hartholzfasern und etwa 65 bis 75 Gew.-% Weichholzfasern enthalten, um insgesamt 100 % zu ergeben, wobei die holzfreien gebleichten Cellulosepulpefasern eine Viskosität von mindestens 10 cps, einen Weißgrad von 80 bis 89 ISO und eine aus der Entfernung der Verunreinigungen in den alten Wellpappebehältern resultierende Reinheit aufweisen, wobei die Viskosität und Reinheit die Pulpefasern dafür geeignet macht die alleinige Pulpekomponente bei der Herstellung von weißem Papier zu sein, wobei das Papiererzeugnis bei Abwesenheit von zugegebenen Farbstoffen oder Pigmenten, um eine verschiedene Färbung vorzusehen, weiß ist.

2. Papiererzeugnis nach Anspruch 1, worin die holzfreien gebleichten Celluosepulpefasern nach Veredelung einen CSF von 400 bis 450 haben.

3. Papiererzeugnis nach Anspruch 1 oder 2, worin die Pulpekomponente 100 Gew.-% der holzfreien gebleichten Cellulosepulpefasern ist.

4. Papiererzeugnis nach Anspruch 1, 2 oder 3 mit einer Zugbruchlänge von mindestens 5 km.

5. Papiererzeugnis nach Anspruch 1, 2 oder 3 mit Schreib- und Druckqualität.

6. Holzfreie gebleichte Cellulosefaserpulpe, die aus recyclisierten Fasern von alten Wellpappebehältern stammt, mit einer Kappa-Zahl von 80 bis 120, wobei die Pulpe eine Viskosität von mindestens 10 cps und einen Ligningehalt von weniger als 1 Gew.-%, einen Weißgrad von 80 bis 89 ISO hat, enthaltend etwa 25 bis 35 Gew.-% Hartholzfasern aus Wellpappe und etwa 65 bis 75 Gew.-% Weichholzfasern aus Deckbahnen von alten Wellpappebehältern, um insgesamt 100 % zu ergeben und eine aus der Entfernung der Verunreinigungen in den alten Wellpappebehältern resultierende Reinheit, wobei die Viskosität und Reinheit die Pulpefasern dafür geeignet macht die alleinige Pulpekomponente bei der Herstellung von weißem Papier zu sein.

7. Gebleichte Pulpe nach Anspruch 6 mit einem CSF von 400 bis 450 nach Veredelung.

8. Verfahren zum Herstellen eines Papiererzeugnisses, umfassend:
i) Bereitstellen einer Pulpekomponente, umfassend 10 Gew.-% bis 100 Gew.-% holzfreie gebleichte Cellulosepulpefasern mit einem Ligningehalt von weniger als 1 Gew.-%, einer Viskosität von mindestens 10 cps, einem Weißgrad von 80 bis 89 ISO, wobei die Fasern etwa 25 bis 35 Gew.-% Hartholzfasern und 65 bis 75 Gew.-% Weichholzfasern enthalten, um insgesamt 100 % zu ergeben, wobei die Pulpekomponente aus recyclisierten alten Wellpappebehältern stammt, mit einer Kappa-Zahl von 80 bis 120 und einer aus der Entfernung der Verunreinigungen in den alten Wellpappebehältern resultierende Reinheit aufweisen, wobei die Viskosität und Reinheit die Pulpefasern dafür geeignet macht die alleinige Pulpekomponente bei der Herstellung von weißem Papier zu sein,
ii) Formen dieser Pulpe zu einem weißen Papiererzeugnis in einem Papierherstellungsvorgang (104) und
iii) Gewinnen des gebildeten Papiererzeugnisses,
iv) wobei das Papiererzeugnis bei der Abwesenheit von Farbstoffen oder Pigmenten, die zugegeben werden, um eine Färbung vorzusehen, weiß ist.

9. Verfahren nach Anspruch 8, worin die recyclisierten Fasern von 25 bis 100 Gew.-% der Pulpekomponente bilden.

10. Verfahren nach Anspruch 8, worin die Pulpekomponente 100 Gew.-% der holzfreien gebleichten Cellulosepulpefasern ist.

11. Verfahren nach Anspruch 8, 9 oder 10, worin die holzfreien gebleichten Cellulosepulpefasern einen CSF von 400 bis 450 haben.

12. Cellulosepulpe mit einer Kappa-Zahl von bis zu 40, wobei die Pulpe aus Fasern aus recyclisierten alten Wellpappebehältern stammt, mit einer Kappa-Zahl von 80 bis 120, wobei die Fasern eine Viskosität von mindestens etwa 10 cps aufweisen, etwa 25 bis 35 Gew.-% Hartholzfasern und etwa 65 bis 75 Gew.-% Weichholzfasern enthalten, um insgesamt 100 % zu ergeben, und eine aus der Entfernung von Verunreinigungen in den alten Wellpappebehältern resultierende Reinheit aufweisen, von einer derartigen Qualität, daß die Pulpe nach Bleichen, um eine holzfreie Pulpe mit einem Ligningehalt von weniger als 1 Gew.-% und einem Weißgrad von 80 bis 89 ISO zu bilden, die alleinige Pulpe bei Herstellung von weißem Papier sein kann.

13. Pulpe nach Anspruch 12, mit einem CSF von 400 bis 450 nach Verdelung.

## Revendications

1. Produit de papier présentant un constituant de pâte à papier comprenant de 10 à 100 % en poids de fibres de pâte de cellulose blanchie sans bois présentant une teneur en lignine inférieure à 1% en poids et provenant de fibres recyclées de vieux récipients ondulés présentant un nombre kappa de 80 à 120; lesdites fibres recyclées contenant d'environ 25 à 35 % en poids de fibres de feuillus et d'environ 65 à 75 % en poids de fibres de bois résineux jusqu'à un total de 100 %, lesdites fibres de pâte de cellulose blanchie sans bois présentant une viscosité d'au moins 10 cP, un degré de blanc de 80 à 89 ISO et une propreté résultant de l'élimination de contaminants dans les vieux récipients ondulés, lesdites viscosité et propreté rendant lesdites fibres de pâte à papier capables de constituer l'unique constituant de pâte à papier dans la fabrication de papier blanc, ledit produit de papier étant blanc en l'absence d'agents colorants ou de pigments ajoutés pour fournir une coloration différente.

2. Produit de papier selon la revendication 1, dans lequel lesdites fibres de pâte de cellulose blanchie sans bois présentent une valeur CSF de 400 à 450 dans l'état raffiné.

3. Produit de papier selon la revendication 1 ou 2, dans lequel ledit constituant de pâte à papier représente 100 % en poids desdites fibres de pâte de cellulose blanchie sans bois.

4. Produit de papier selon la revendication 1, 2 ou 3 présentant une longueur de rupture à la traction d'au moins 5 km.

5. Produit de papier selon la revendication 1, 2 ou 3 de qualité écriture et impression.

6. Pâte de fibres de cellulose blanchie sans bois provenant de fibres recyclées de vieux récipients ondulés présentant un nombre kappa de 80 à 120 ; ladite pâte à papier présentant une viscosité d'au moins 10cP et une teneur en lignine inférieure à 1 % en poids, un degré de blanc de 80 à 89 ISO, contenant d'environ 25 à 35 % en poids de fibres de feuillus provenant de carton ondulé et d'environ 65 à 75 % en poids de fibres de bois résineux provenant de carton de doublure de vieux récipients ondulés jusqu'à un total de 100 % et une propreté résultant de l'élimination de contaminants dans les vieux récipients ondulés, lesdites viscosité et propreté rendant lesdites fibres de pâte à papier capables de constituer l'unique constituant de pâte à papier dans la fabrication de papier blanc.

7. Pâte à papier blanchie selon la revendication 6 présentant une valeur CSF de 400 à 450 dans l'état raffiné.

8. Procédé de production d'un produit de papier comprenant les étapes consistant :
i) à fournir un constituant de pâte à papier comprenant de 10 % à 100 % en poids de fibres de pâte de cellulose blanchie sans bois présentant une teneur en lignine inférieure à 1 % en poids, une viscosité d'au moins 10 cP, un degré de blanc de 80 à 89 ISO, lesdites fibres contenant d'environ 25 à 35 % en poids de fibres de feuillus et de 65 à 75 % en poids de fibres de bois résineux jusqu'à un total de 100 %, ledit constituant de pâte à papier provenant de fibres recyclées de vieux récipients ondulés présentant un nombre kappa de 80 à 120 et présentant une propreté résultant de l'élimination de contaminants dans les vieux récipients ondulés, lesdites viscosité et propreté rendant lesdites fibres de pâte à papier capables de constituer l'unique constituant de pâte à papier dans la fabrication de papier blanc,
ii) à former de ladite pâte à papier en un produit de papier blanc dans une opération de fabrication de papier (104), et
iii) à récupérer le produit de papier formé,
iv) ledit produit de papier étant blanc en l'absence d'agents colorants ou de pigments ajoutés, ajoutés pour fournir une coloration différente.

9. Procédé selon la revendication 8, dans lequel lesdites fibres recyclées constituent de 25 à 100 % en poids dudit constituant de pâte à papier.

10. Procédé selon la revendication 8, dans lequel ledit constituant de pâte à papier représente 100 % en poids desdites fibres de pâte de cellulose blanchie sans bois.

11. Procédé selon la revendication 8, 9 ou 10, dans lequel lesdites fibres de pâte de cellulose blanchie sans bois présentent une valeur CSF de 400 à 450.

12. Pâte de cellulose présentant un nombre kappa allant jusqu'à 40, ladite pâte à papier provenant de fibres de vieux récipients recyclés, ondulés, présentant un nombre kappa de 80 à 120, lesdites fibres présentant une viscosité d'au moins environ 10 cP, contenant d'environ 25 à 35 % en poids de fibres de feuillus et d'environ 65 à 75 % en poids de fibres de bois résineux jusqu'à un total de 100 %, et présentant une propreté résultant de l'élimination de contaminants dans les vieux récipients ondulés d'une qualité telle que la pâte à papier, après un blanchiment pour former une pâte à papier sans bois présentant une teneur en lignine inférieure à 1 % en poids et un degré de blanc de 80 à 89 ISO, est capable de constituer l'unique pâte à papier dans la fabrication de papier blanc.

13. Pâte à papier selon la revendication 12 présentant une valeur CSF de 400 à 450 dans l'état raffiné.
